# EUROPEAN PATENT APPLICATION

(11) **EP 4 459 757 A1**
(43) Date of publication of application: **06.11.2024**
(21) Application number: 23903883.9
(22) Date of filing: 07.12.2023
(51) Int. Cl.: H01M 50/121, H01M 50/242, H01M 50/24, H01M 50/105, H01M 50/133, H01M 50/593, H01M 50/586, H01M 50/30, H01M 50/211

(54) **SECONDARY BATTERY PACK**

(30) Priority: 12.12.2022 KR 20220172846
(71) Applicant: LG Energy Solution, Ltd., Seoul 07335 (KR)
(72) Inventor: KIM, Bong Soo, Daejeon 34122 (KR); LEE, Junghoon, Daejeon 34122 (KR); NOH, Jaekyo, Daejeon 34122 (KR); KIM, Hyeon Jin, Daejeon 34122 (KR); KWON, Soon Kwan, Daejeon 34122 (KR); HAN, Suenghoon, Daejeon 34122 (KR)
(74) Representative: Goddar, Heinz J.
(86) International application number: PCT/KR2023/020074
(87) International publication number: WO 2024/128680

(57) **Abstract**

The present disclosure provides a secondary battery pack comprising: at least one pouch-type cells; and a case having an interior space to receive the pouch-type cells, wherein the pouch-type cells each include an electrode assembly and a pouch film to receive the electrode assembly, wherein the pouch film consists of a polymer only or a polymer and adhesive only.

## Description

### [Technical Field]

This application claims the benefit of priority from Korean Patent Application No. 10-2022-0172846, filed December 12, 2022, the content of which is incorporated herein by reference in its entirety.

The present disclosure relates to a secondary battery pack. More specifically, the disclosure relates to a secondary battery pack comprising pouch-type cells.

### [Background Technologies]

A secondary battery utilizes lithium ions to charge and discharge, and can store and supply electrical energy. The secondary battery may be used in the form of a pack comprising a plurality of cells. The plurality of cells may change in volume as charging and discharging proceeds. For example, a secondary battery using a silicon negative electrode, a secondary battery using lithium metal, and the like suffer from the problem that the thickness of the negative electrode changes by about 10% during charging and discharging. This problem occurs in most secondary batteries, including lithium ion secondary batteries, all-solid-state secondary batteries, semi-solid-state secondary batteries, and lithium-sulfur secondary batteries.

Cylindrical and prismatic cells each have a fixed case shape, which makes it relatively impossible to apply constant pressure to the cell. In addition, prismatic cells may be more susceptible to swelling defects, where the wide sides of the battery bulge, unlike cylindrical cells, without a special pressurization device.

Since the pouch-type cells have a variable case size, the pouch-type cells can be subjected to a constant pressure from the outside even if the size of the pouch-type cells changes, and in terms of weight and safety, the use of pouch-type cells in secondary battery packs is being considered for light cell weight (high energy density). However, since pouch-type cells contain metal to prevent moisture permeation and enhance impact resistance, it is difficult to achieve high energy density in secondary battery packs containing pouch-type cells.

Therefore, technology development is underway for secondary battery packs that include pouch-type cells using non-metallic materials to achieve high energy density.

### [Prior Art Reference]

### [Patent Document]

(Patent Document 1) Korean Laid-Open Publication No. 10-2022-0125096

### [Disclosure]

### [Technical Problems]

The present invention is proposed to address the above problems, and it is an objective of the present disclosure to provide a secondary battery pack that has improved energy density, is impact resistant, and can prevent the penetration of moisture or oxygen.

### [Technical Solution]

To achieve the objectives, according to an embodiment of the present disclosure, a secondary battery pack is provided, comprising: at least one pouch-type cell; and a case having an interior space to receive the pouch-type cell, wherein the at least one pouch-type cell each comprises an electrode assembly and a pouch film to receive the electrode assembly, and the pouch film consists of a polymer only or a polymer and adhesive only.

In an embodiment, there is provided a secondary battery pack, wherein the pouch film has a thickness of from 20 µm to 200 µm.

In an embodiment, there is provided a secondary battery pack, wherein the pouch film has a weight per area of between 20 g/m² and 150 g/m².

In an embodiment, there is provided a secondary battery pack, wherein the polymer comprises at least one selected from a group consisting of: nylon, polyethylene, polyamide, polyamide nylon, polypropylene, polyimide, polyvinyl chloride, polyethylene terephthalate, olefin resin, polystyrene, polycarbonate and polyvinyl alcohol.

In an embodiment, there is provided a secondary battery pack, further comprising spacers disposed on sides of the pouch-type cells inside the case, wherein the spacer is a polymer, metal, or elastomer.

In an embodiment, there is provided a secondary battery pack, wherein the polymer comprises rubber.

In an embodiment, there is provided a secondary battery pack, wherein the elastomer is a leaf spring.

In an embodiment, there is provided a secondary battery pack, wherein a positive electrode terminal, a negative electrode terminal, and a gas outlet are arranged on a top surface of the case, and the positive electrode terminal and the negative electrode terminal each is electrically connected with the pouch-type cells.

In an embodiment, wherein a positive electrode terminal is disposed on a top surface of the case and a negative electrode terminal is disposed on a bottom surface of the case, the positive electrode terminal and the negative electrode terminal are each electrically connected with the pouch-type cells, and a gas outlet is disposed on at least one of the top surface and the bottom surface of the case.

### [Advantageous Effects]

By including pouch-type cells comprising only polymers, the secondary battery pack according to an embodiment of the present disclosure can achieve a higher energy density than conventionally available. Furthermore, by using an impact-resistant case, the pouch-type cells, which do not contain metal, can be protected from impact. Furthermore, by using a casing, external moisture or oxygen can be prevented from accessing the pouch-type cells. Furthermore, because the pouch is composed of polymer, it can be formed thicker and still have a low weight, and it can accommodate the electrode assembly even if tears occur during the process of molding the shape of the pouch.

### [Brief Description of the Drawings]

FIG. 1 is a drawing depicting a pouch-type cell, according to an embodiment of the present disclosure.
FIG. 2 is a drawing illustrating a pouch-type cell, according to another embodiment of the present disclosure.
FIG. 3 is a diagram illustrating a step in fabricating a pouch for the pouch-type cell of FIG. 1.
FIG. 4 is a diagram illustrating another step in fabricating a pouch of the pouch-type cell of FIG. 1.
FIG. 5 is a perspective view illustrating an embodiment of a secondary battery pack including the pouch-type cells of FIG. 1.
FIG. 6 is a side view illustrating an embodiment of a secondary battery pack including the pouch-type cells of FIG. 1.
FIG. 7 is a perspective view depicting another embodiment of a secondary battery pack including the pouch-type cells of FIG. 2.
FIG. 8 is a side view illustrating another embodiment of a secondary battery pack including the pouch-type cells of FIG. 2.
FIG. 9 is a photograph of a measured cup forming result of a pouch-type cell according to an embodiment of the present disclosure.
FIG. 10 is a photograph of a measured cup forming result of a pouch-type cell according to an embodiment of the present disclosure.

### [Best Mode for Practicing the Invention]

The following describes this disclosure in more detail to facilitate understanding of this disclosure.

The terms and words used in the specification and claims are not to be construed in their ordinary or dictionary sense, but are to be interpreted in a manner consistent with the technical ideas of this disclosure, based on the principle that the inventor may properly define the concepts of the terms to best describe his invention.

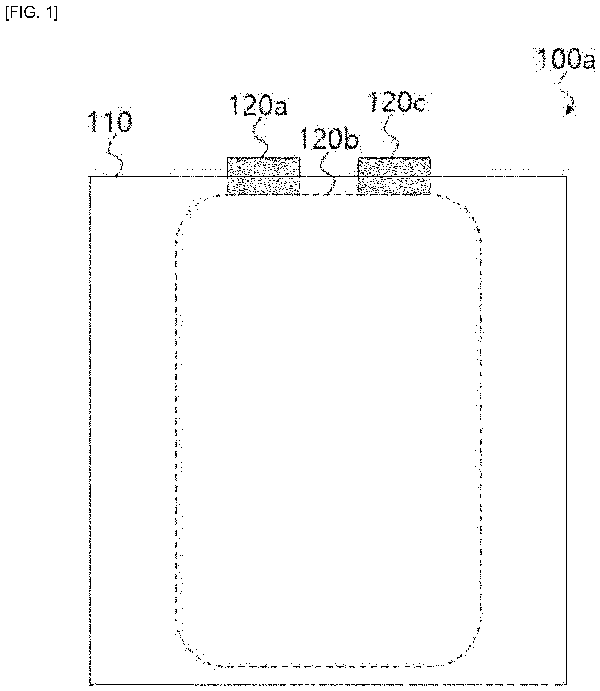

FIG. 1 is a drawing depicting a pouch-type cell, according to an embodiment of the present disclosure.

Referring to FIG. 1, a pouch-type cell 100a according to an embodiment of the present disclosure includes an electrode assembly 120b comprising alternately stacked electrodes and separators, and a pouch 110 for receiving the electrode assembly, wherein the pouch 110 may be constructed of a polymer. The composition and structure of the pouch 110 will be described later. The electrode assembly 120b is a power generation element capable of being charged and discharged, comprising an alternating stack of electrodes and separators, wherein the electrodes include positive electrodes and negative electrodes, and wherein the positive electrodes, the separators, and the negative electrodes may be disposed alternately.

The electrode assembly 120b may have electrode tabs 120a, 120c connected to one end thereof. In an embodiment of the present disclosure, the electrode tabs 120a, 120c may be connected to only one surface of the electrode assembly 120b. One of the electrode tabs 120a, 120c may be an electrode tab connected to positive electrodes, and the other may be an electrode tab connected to negative electrodes. Through the electrode tabs 120a, 120c, the electrode assembly 120b may be electrically connected to an external device.

The pouch 110 may accommodate the electrode assembly 120b. The pouch 110 may have an internal space for receiving the electrode assembly 120b. Conventional pouches have a structure comprising an aluminum alloy thin film and a polymer laminated to the aluminum alloy thin film. Thus, since the conventional pouch includes the aluminum alloy thin film, it was possible to secure a certain level of mechanical strength while preventing external gas or moisture from penetrating into the electrode assembly 120b. However, the aluminum alloy thin film increased the weight of the pouch-type cell 100a, making it difficult to secure energy density.

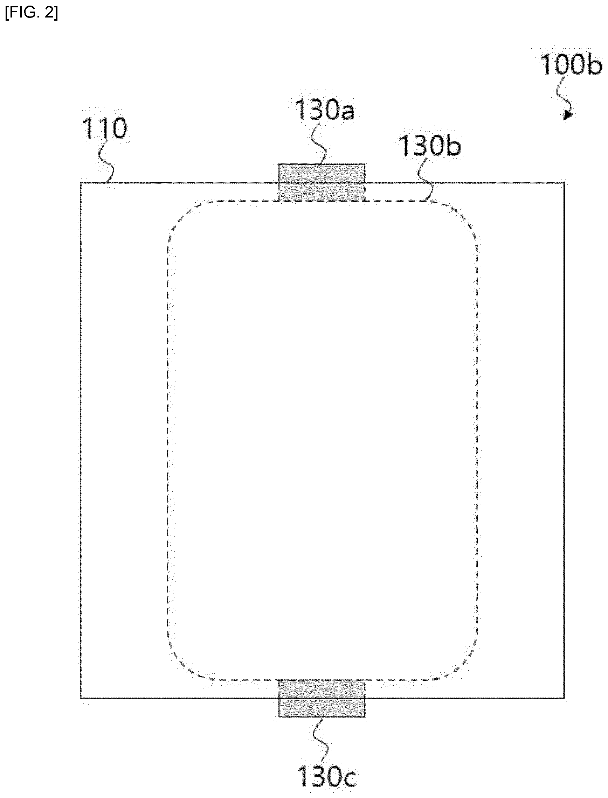

FIG. 2 is a drawing illustrating a pouch-type cell, according to another embodiment of the present disclosure.

Referring to FIG. 2, a pouch-type cell 100b according to another embodiment of the present disclosure may include an electrode assembly 130b comprising alternating stacked layers of electrodes and separators, and a pouch 110 for receiving the electrode assembly and electrolyte, wherein the pouch 110 may be constructed of a polymer. The composition and structure of the pouch 110 will be described later. The electrode assembly 130b containing the electrolyte is a chargeable and dischargeable power generation device, comprising an alternating stack of electrodes and separators, wherein the electrodes include positive electrodes and negative electrodes, wherein the positive electrodes, the separators, and the negative electrodes are alternately located and may contain an electrolyte in the internal pores.

The electrode assembly 130b may have electrode tabs 130a, 130c connected to the ends thereof. In another embodiment of the present disclosure, the electrode tabs 130a, 130c may be connected to both ends of the electrode assembly 130b. One of the electrode tabs 130a, 130c may be an electrode tab connected to positive electrodes, and the other may be an electrode tab connected to negative electrodes. Through the electrode tabs 130a, 130c, the electrode assembly 130b may be electrically connected to an external device.

The pouch 110 can accommodate the electrode assembly 130b and the electrolyte. The pouch 110 may have an internal space for receiving the electrode assembly 130b and the electrolyte. Prior art pouches have a structure comprising an aluminum alloy thin film and a polymer laminated to the aluminum alloy thin film. Thus, because the conventional pouch includes the aluminum alloy thin film, it is possible to secure a certain level of mechanical strength while preventing external gas or moisture from penetrating into the electrode assembly 130b. However, the aluminum alloy thin film increased the weight of the pouch-type cell 100b, making it difficult to secure energy density.

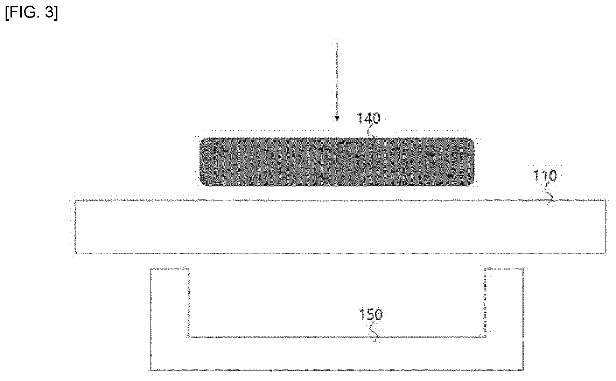

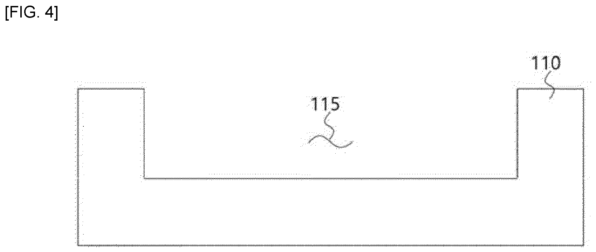

FIGS. 3 and 4 are drawings illustrating a step in fabricating a pouch for the pouch-type cell of FIG. 1.

Referring to FIGS. 3 and 4, the pouch 110 may include an interior space 115 for receiving the electrode assembly described above. The lower mold 150 and punch mold 140 can be used to apply pressure to the pouch 110 to form the interior space 115. Since the pouch 110 according to an embodiment of the present disclosure is composed solely of the polymer, the interior space 115 can be formed more easily than when including the aluminum alloy thin film. Furthermore, because the prior art pouches include the aluminum alloy thin film, they are made with a reduced thickness to achieve a high energy density. Such conventional pouches suffer from tearing due to being caught by the corners of the lower mold 150, etc. during the process of applying pressure to form the interior space. In this case, the pouch is inadequate to accommodate the electrode assembly. In contrast, since the pouch 110 according to an embodiment of the present disclosure does not include the aluminum alloy thin film, it can be fabricated using the polymer to a similar thickness and still not tear. Thus, even if the pouch 110 is not thick and heavy, it can still be used to accommodate the electrode assembly. The thickness of the pouch 110 may be from 20 µm to 200 µm, and preferably from 50 µm to 150 µm.

The pouch 110 may be a single layer of polymer, or may be formed by laminating a plurality of polymers. The polymer may be one or more of nylon, polyethylene, polyamide, polyamide nylon, polypropylene, polyimide, polyvinyl chloride, polyethylene terephthalate, olefin resin, polystyrene, polycarbonate and polyvinyl alcohol. Furthermore, these polymer layers may be multilayered to form an adhesive film on one surface for adhesion of the film. The material of the adhesive film may be an adhesive film for use in a conventional pouch for a secondary battery. For example, it may comprise an adhesive layer, a polyimide layer, and a nylon layer in the direction from the bottom to the top. The polyimide layer may be composed of a polyimide material, and the nylon layer may be composed of a nylon material.

As such, since the pouch 110 does not include metal and is composed solely of polymer, a pouch-type cell comprising the pouch 110 can achieve a high energy density. The pouch 110 according to an embodiment of the present disclosure has a weight per area of about 150 g/m² or less, and a secondary battery pack including the pouch-type cell can have a pack energy density of 240 Wh/kg or more. If the weight per area of the pouch 110 exceeds 150 g/m², the pack energy density will fall below 240 Wh/kg and the energy density advantage of the secondary battery pack according to an embodiment of the present disclosure will be lost. If the weight per area of the pouch 110 is less than 20 g/m², it may be too thin and the film may lack rigidity, causing leakage of electrolyte.

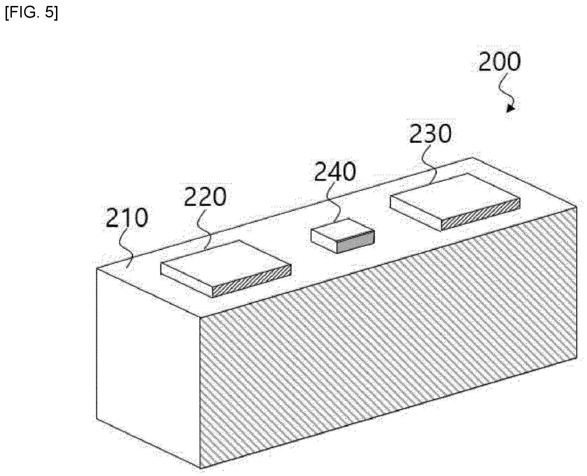

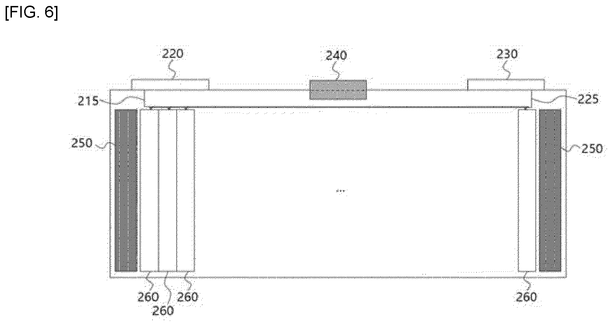

FIGS. 5 and 6 are drawings illustrating an embodiment of a secondary battery pack including the pouch-type cells of FIG. 1.

Referring to FIGS. 5 and 6, a secondary battery pack 200 according to an embodiment of the present disclosure may include a case 210, a positive electrode terminal 220, a negative electrode terminal 230, a gas outlet 240, a spacer 250, and a plurality of pouch-type cells 260. The plurality of pouch-type cells 260 may be substantially the same as those of the pouch-type cells described above, such as the unidirectional tab pouch-type cells (see FIG. 1). The case 210 may include a plurality of pouch-type cells 260 inside. The number of the plurality of pouch-type cells 260 is not limited, and different numbers may be selected and used as needed. The case 210 may be constructed of a material having rigidity. For example, the case 210 may be constructed of stainless steel, an aluminum alloy containing at least 50% aluminum, a magnesium alloy containing at least 50% magnesium, a titanium alloy containing at least 50% titanium, or the like. The case 210 may serve to protect the plurality of pouch-type cells 260 from external impact and to prevent moisture from penetrating into the plurality of pouch-type cells 260. Due to the case 210, the plurality of pouch-type cells 260 may be protected from external impact or moisture intrusion, even if the aluminum alloy thin film is not used.

The case 210 can have four sides, and a pair of sides facing each other can have a larger area than the other pair of sides facing each other. For example, one pair of sides may be equal to or more than twice as wide as the other pair of sides.

The positive electrode terminal 220 and the negative electrode terminal 230 may each be connected to the electrode tabs of the plurality of pouch-type cells 260 by separate connecting members 215, 225. The connecting members 215, 225 can be any electrically conductive material. The gas outlet 240 can vent gases generated during operations of the secondary battery pack 200. A structure including the connecting members 215, 225, the positive electrode terminal 220, the negative electrode terminal 230, and the gas outlet 240 may be defined as a top assembly. The gas outlet 240 is shown disposed on a top surface of the case 210, but this is exemplary and the gas outlet 240 may be disposed on a bottom surface of the case 210, or may be disposed on both a top surface and a bottom surface of the case 210.

The spacers 250 may be disposed at outermost positions of the plurality of pouch-type cells 260, and may be in the form of a porous foam of a polymer (e.g., rubber) and metal, or an elastomer (e.g., leaf spring). The spacers 250 may decrease in volume in response to changes in pressure generated by the plurality of pouch-type cells 260. The spacers 250 may decrease in thickness by 5 to 90% at a pressure of about 10 atm. With the spacers 250 and a rigid case 210, a range of pressures can be applied to the plurality of pouch-type cells 260 even as volume changes occur within the interior of the case 210 without external pressure. Furthermore, by disposing the plurality of pouch-type cells 260 in the direction of the long axis of the case 210, the secondary battery pack 200 can withstand internal pressure generated from the plurality of pouch-type cells 260 without deforming the case 210 by reducing the area where pressure is generated.

Because the secondary battery pack 200 includes the spacers 250, it can maintain a constant range of pressure even as the thickness of the pouch-type cell 260 varies within the cell, without the need for an external device, which is advantageous for weight reduction.

Although not shown, a bulkhead may be present between each of the plurality of pouch-type cells 260. For example, the bulkhead may comprise the same material as the spacers 250 and may decrease in volume in response to changes in pressure generated in each of the plurality of pouch-type cells 260. The bulkhead may be defined substantially as a spacer. The bulkheads may be disposed between each of the plurality of pouch-type cells 260, but may be disposed between only some of the pouch-type cells 260. When the bulkheads are disposed between the plurality of pouch-type cells 260, the plurality of pouch-type cells 260 can be physically separated from each other, and in the event of venting due to swelling, the location of the venting can be controlled, thereby preventing cell to cell propagation of fire between the pouch-type cells 260.

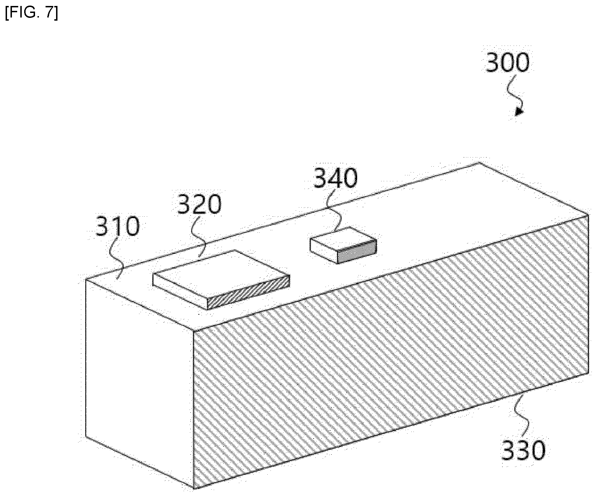

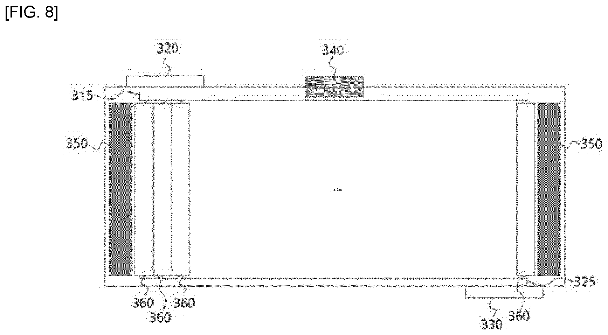

FIGS. 7 and 8 are drawings illustrating another embodiment of a secondary battery pack including the pouch-type cells of FIG. 2.

Referring to FIGS. 7 and 8, a secondary battery pack 300 according to another embodiment of the present disclosure may include a case 310, a positive electrode terminal 320, a negative electrode terminal 330, a gas outlet 340, a spacer 350, and a plurality of pouch-type cells 360. The plurality of pouch-type cells 360 may be substantially the same as any of the pouch-type cells described above, such as the unidirectional tab pouch-type cells (see FIG. 1). The case 310 may include a plurality of pouch-type cells 360 inside. The number of the plurality of pouch-type cells 360 is not limited, and different numbers may be selected and used as needed. The case 310 may be constructed of a material having rigidity. For example, the case 310 may be constructed of stainless steel, an aluminum alloy containing at least 50% aluminum, a magnesium alloy containing at least 50% magnesium, a titanium alloy containing at least 50% titanium, or the like. The case 310 may serve to protect the plurality of pouch-type cells 360 from external impact and to prevent moisture from penetrating into the plurality of pouch-type cells 360. Due to the case 310, the plurality of pouch-type cells 360 may be protected from external impact or moisture intrusion, even if the aluminum alloy thin film is not used.

The case 310 can have four sides, and a pair of sides facing each other can have a larger area than the other pair of sides facing each other. For example, one pair of sides may be more than twice as wide as the other pair of sides.

The positive electrode terminals 320 and negative electrode terminals 330 may each be connected to electrode tabs of the plurality of pouch-type cells 360 by separate connecting members 315, 325. The connecting members 315, 325 can be any electrically conductive material. The gas outlet 340 may vent gases generated during operation of the secondary battery pack 300. A structure including the connecting members 315, 325, the positive electrode terminal 320, and the gas outlet 340 may be defined as a top assembly. The negative electrode terminal 330 is not included in the top assembly because it is disposed on the lower portion of the case 310. Although the gas outlet 340 is shown disposed on the top surface of the case 310, this is exemplary and the gas outlet 340 may be disposed on the bottom surface of the case 310, or may be disposed on both the top and bottom surfaces of the case 310.

The spacers 350 may be disposed at outermost positions of the plurality of pouch-type cells 360, and may be in the form of polymer, rubber, metal foam, or leaf springs. The spacers 350 may decrease in volume in response to changes in pressure generated by the plurality of pouch-type cells 360. The spacers 350 may decrease in thickness by 5 to 90% at a pressure of about 10 atm. With the spacers 350 and a rigid case 310, a certain range of pressure can be applied to the plurality of pouch-type cells 360 even as volume changes occur inside the case 310 without external pressure. Furthermore, by disposing the plurality of pouch-type cells 360 in the direction of the long axis of the case 310, the secondary battery pack 300 is able to withstand internal pressure generated from the plurality of pouch-type cells 360 without deforming the case 310 by reducing the area where pressure is generated.

Because the secondary battery pack 300 includes the spacers 350, it can maintain a constant range of pressure even as the thickness of the pouch-type cells 360 varies within the cell, without the need for an external device, which is advantageous for weight reduction.

Although not shown, bulkheads may be present between each of the plurality of pouch-type cells 360. For example, the bulkheads may comprise the same material as the spacers 350 and may decrease in volume in response to changes in pressure generated in each of the plurality of pouch-type cells 360. The bulkheads may be disposed between all of the plurality of pouch-type cells 360, but may also be disposed between only some of the pouch-type cells 360.

### [Mode for Practicing the Invention]

Hereinafter, the embodiments and the comparative examples applied to the lithium sulfur battery will be compared. The specifications of the embodiments and the comparative examples are as illustrated in Table 1. Embodiment 1 and Comparative Example 1 each use 20 pouch-type cells, while Comparative Example 2 uses cylindrical cells.

Specifically, Embodiment 1 used a pouch made of nylon (thickness 100 µm), rubber foam spacers (weight 9.4 g), and a stainless steel case (thickness 0.2 t, 100*600*400 mm), while Comparative Example 1 used a pouch containing an aluminum alloy thin film (thickness 150 µm, aluminum thickness 80 µm, polymer insulation layer and adhesive layer 70 µm).

### Experimental Example 1: Checking of the Energy Density

**[Table 1]**

| | Embodiment 1 | Comparative Example 1 (pouch-type) | Comparative Example 2 (cylinder-type) | Unit |
|---|---|---|---|---|
| Cell capacity | 32 | 1.6 | 3.8 | Ah |
| Cell Energy | 68 | 3.4 | 8.1 | Wh |
| 20 cell weight | 195 | 217 | -. | 9 |
| Weight of Metal Case | 34.7 | -. | -. | 9 |
| Top Assembly Weight | 5 | -. | -. | 9 |
| Spacer weight | 9.4 | -. | -. | 9 |
| Cell Energy Density | 280 | 315 | 226 | Wh/kg |
| Pack/Cell Energy Density Ratio | 90 | 75 | 90 | B |
| Secondary battery pack energy density | 252 | 236 | 204 | Wh/kg |

It can be seen that a secondary battery pack according to an embodiment of the present disclosure has a higher cell energy density and a higher pack energy density than a secondary battery pack according to a comparative example. The secondary battery pack has a higher pack energy density because it does not need to separately include a pad or pressurization device. In addition, the secondary battery pack design complexity is reduced and safety is improved with the existence of a metal case and a gas outlet.

The secondary battery pack according to Comparative Example 2 uses cylinder-type cells and therefore has the lowest energy density due to the metal case applied to each cylinder-type cell.

### Experimental Example 2: Comparison of Safety

A safety comparison of Embodiment 1, Comparative Example 1, and Comparative Example 2 can be found in Table 2 below.

**[Table 2]**

| | Embodiment 1 | Comparative Example 1 | Comparative Example 2 |
|---|---|---|---|
| Cell deformation in the presence of trace gases | X | ○ | X |
| Controllability of vent positions | X | X | X |
| Existence of Metal case | ○ | X | ○ |
| Existence of In-pack bulkheads | ○ | X | X |
| Controllability of cell volume changes | ○ | X | X |

Embodiment 1 allows control of cell volume changes due to the metal case and in-pack bulkhead. In contrast, Comparative Example 1 lacks a metal casing and in-pack bulkheads, making cell volume changes less controllable.

### Experimental Example 3: Comparison of Lifetime Characteristics

Life characteristics of secondary battery packs containing pouch-type cells with and without spacers were compared. Embodiment 2 used 2 mm thick rubber foam spacers, while Comparative Example 3 did not use spacers. Embodiment 2 and Comparative Example 3 were conducted using lithium sulfur battery pouch cells at 400 Wh/kg, and residual capacity was compared by driving charge and discharge cycles at 0.3C discharge and 0.2C charge. The comparison results are shown in Table 3 below.

**[Table 3]**

| Cycles | Embodiment 2 | Comparative Example 3 |
|---|---|---|
| 5 | 100 | 100 |
| 50 | 95.7 | 96.2 |
| 100 | 95 | 89.9 |
| 150 | 92.8 | 87.4 |

As the number of cycles increased, it was observed that the life characteristics (capacity retaining rate) of Embodiment 2 with spacers remained high.

### Experimental Example 4: Verification of the Improvement in Bad Tears

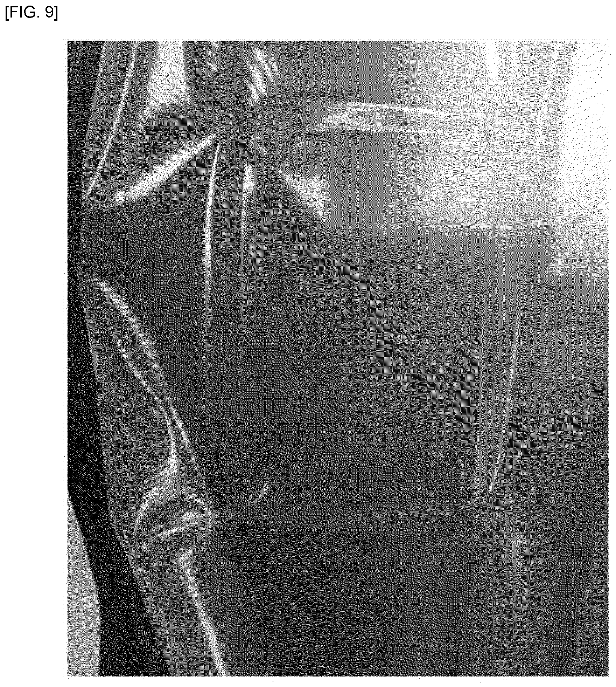

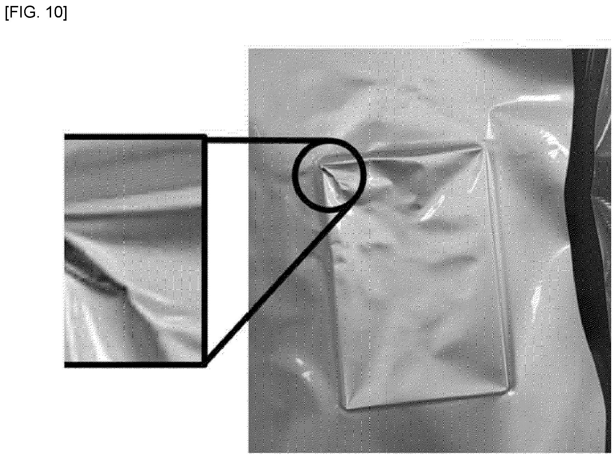

Cup molding was performed on the pouches of Embodiment 1 and Comparative Example 1 to a depth of 6 mm or more. As a result of the molding, it was found that in the case of embodiment 1, which uses nylon as in the present invention, the pouch was not torn despite the cup molding and a cup was formed (see FIG. 9). However, in the case of Comparative Example 1 using an aluminum pouch, tearing occurred when forming the cup (see FIG. 10).

Although the present disclosure has been described above by way of limited embodiments and drawings, the disclosure is not limited thereto, and various modifications and variations may be made by one of ordinary skill in the technical field to which the present disclosure belongs within the equitable scope of the technical ideas of the present disclosure and the patent claims set forth below.

### [Explanation of Reference Numerals]

- 100a, 100b:: Pouch-type cells
- 110:: Pouch
- 120a, 120c:: Electrode tabs
- 120b:: Electrode assembly
- 130a, 130c:: Electrode tabs
- 130b:: Electrode assembly
- 140:: Punch mold
- 150:: Lower mold
- 115:: Interior space
- 200, 300:: Secondary battery packs
- 210, 310:: Case
- 220, 320:: Positive electrode terminals
- 230, 330:: Negative electrode terminals
- 240, 340:: Gas outlet
- 250, 350:: Spacers
- 260, 360:: Pouch-type cells
- 215, 225:: Connecting members
- 315, 325:: Connecting members

## Claims

1. A secondary battery pack comprising:
at least one pouch-type cell; and
a case having an interior space to receive the pouch-type cell,
wherein the at least one pouch-type cell each comprises an electrode assembly and a pouch film to receive the electrode assembly, and the pouch film consists of a polymer only or a polymer and adhesive only.

2. The secondary battery pack according to claim 1, wherein the pouch film has a thickness of from 20 µm to 200 µm.

3. The secondary battery pack according to claim 1, wherein the pouch film has a weight per area of between 20 g/m² and 150 g/m².

4. The secondary battery pack according to claim 1, wherein the polymer comprises at least one selected from a group consisting of: nylon, polyethylene, polyamide, polyamide nylon, polypropylene, polyimide, polyvinyl chloride, polyethylene terephthalate, olefin resin, polystyrene, polycarbonate and polyvinyl alcohol.

5. The secondary battery pack according to claim 1, further comprising spacers disposed on sides of the pouch-type cells inside the case,
wherein the spacer is a polymer, metal, or elastomer.

6. The secondary battery pack according to claim 5, wherein the polymer of the spacer comprises rubber.

7. The secondary battery pack according to claim 5, wherein the elastomer is a leaf spring.

8. The secondary battery pack according to claim 1, wherein a positive electrode terminal, a negative electrode terminal, and a gas outlet are arranged on a top surface of the case, and the positive electrode terminal and the negative electrode terminal each is electrically connected with the pouch-type cells.

9. The secondary battery pack according to claim 1, wherein a positive electrode terminal is disposed on a top surface of the case and a negative electrode terminal is disposed on a bottom surface of the case, the positive electrode terminal and the negative electrode terminal are each electrically connected with the pouch-type cells, and a gas outlet is disposed on at least one of the top surface and the bottom surface of the case.
